# EUROPEAN PATENT APPLICATION

(11) **EP 4 290 484 A1**
(43) Date of publication of application: **13.12.2023**
(21) Application number: 22177577.8
(22) Date of filing: 07.06.2022
(51) Int. Cl.: G06V 40/16, G06V 40/18

(54) **FACE-TO-CAMERA DISTANCE MEASUREMENT FOR TELEMEDICAL OPHTHALMOLOGICAL TESTS**

(71) Applicant: OptiCare Medtech S.r.l., Sibiu Sibiu (RO)
(72) Inventor: ISTRATE, Sinziana, 077135 Mogosoaia (RO); GECUI, Tudor-Cristian, 550399 Sibiu (RO); BRODETCHI, Andrei, 550005 Sibiu (RO); BRASOVEANU, Andrei, 515800 Sebes (RO)
(74) Representative: ETL IP Patent- und Rechtsanwaltsgesellschaft mbH

(57) **Abstract**

According to a first aspect of the present invention, a computer-implemented method for face-to-camera distance measurement is provided. The method may be performed on a backend-server. The method may comprise receiving image data of a user's face, the image data being recorded by a camera. The method may comprise performing face recognition, wherein face recognition may comprise estimating an age and a gender of the user and/or obtaining the age and gender of the user via user input, and selecting a population average value for pupil distance that matches to the age and gender of the user, and wherein face recognition may comprise determining a virtual pupil distance in pixels within the image data. The method may comprise receiving the camera's focal length in pixels. The method may comprise performing a similar-triangles-calculation for determining a current face-to-camera distance of the user, preferably based on the following equation: current face-to-camera distance of the user = population average value for pupil distance * focal length in pixels / virtual pupil distance in pixels.

## Description

### TECHNICAL FIELD

The present invention generally concerns the field of human-machine-interaction, and more particularly the measurement of a distance between a user's face and a camera (face-to-camera distance) for providing user guidance in the corresponding human-machine-interaction.

### BACKGROUND

In various human-machine-interactions, wherein the machine is for example a personal computer or a smartphone including an electronic display screen and a camera, the distance between the user and the device is desired. In particular, the user's face may be in a certain distance in front of the camera and/or screen of the machine. Either for providing an appropriate user experience or for performing an appropriate human-machine-interaction, for example a measurement of a user specific value, a specific distance may be desired.

For example, in the field of telemedical ophthalmological tests, a specific distance between the eyes of the user and the camera and/or the electronic display screen is necessary.

The following solutions exist in this field:
Thomson Software Solution, which is a leading supplier of vision testing in the UK, provides a telemedical ophthalmological test which needs a complex preparatory calibration in advance. Only after a calibration of the screen size and the face-to-screen distance through a reference object, it becomes possible to perform the test. In particular, every time the software is run, the user must measure the height of a letter displayed on the screen and enter the measurement. Further, every time the software is run, the user must measure the distance between the center of his eyes and the center of the screen.

Zeiss, which is a manufacturer of optical systems and optoelectronics in Germany, offers a telemedical ophthalmological test which also needs a preparatory calibration of the screen size through using a credit card as a reference object which is placed on the screen. In particular, every time the software is run, the user must calibrate the size of the displayed letters by using the credit card as a reference. The distance between the user and the camera and/or electronic display screen is not measured precisely which leads to a low accuracy of the test. Only, the general distance between the user's body and the electronic display screen is estimated by the arm length of the user.

None of the existing solutions provide sufficient accuracy and ease of use for the user.

It is therefore the technical problem underlying the present invention to provide a method for face-to-camera distance measurement which offers a simple usability for the user and a relatively high accuracy of the measurement.

### SUMMARY

The problem is solved by the subject-matter defined in the independent claims. Advantageous modifications of embodiments of the invention are defined in the dependent claims as well as in the description and the figures.

According to a first aspect of the present invention, a computer-implemented method for face-to-camera distance measurement is provided. The method may be performed on a backend-server. The method may comprise receiving image data of a user's face, the image data being recorded by a camera. The method may comprise performing face recognition, wherein face recognition may comprise estimating an age and a gender of the user and/or obtaining the age and gender of the user via user input, and selecting a population average value for pupil distance that matches to the age and gender of the user. Face recognition may further comprise determining a virtual pupil distance in pixels within the image data. The method may comprise receiving the camera's focal length in pixels. The method may comprise performing a similar-triangles-calculation for determining a current face-to-camera distance of the user, preferably based on the following equation: current face-to-camera distance of the user = population average value for pupil distance * focal length in pixels / virtual pupil distance in pixels.

The backend-server may in particular be a server that can be addressed via the internet. Preferably, the backend-server is configured to enable communication via the WebSocket protocol. Furthermore, the backend-server preferably has a session administration, which is used to manage various sessions that are started by terminals or users. The backend-server may also be designed to offer an automatic timeout of a session and/or to temporarily save a session after a certain period of time or at regular intervals so that the respective session can be continued at a later point in time.

The camera may be an integrated camera of a frontend device, such as a smart device, a smartphone or a personal computer. Alternatively, the camera may be an external camera which is used in conjunction with the frontend device. For example, the camera may be a standard webcam. The frontend device may comprise a firmware of the camera including information about the camera hardware, such as the focal length of the camera.

The image data may preferably be an image stream data, i.e. video stream data recorded by the camera.

The term face recognition may be understood to be a generic term any kind of image analysis relating to a user's face, in particular to characteristics of his face. Face recognition may in particular be based on artificial intelligence, preferably machine-learning. The user's face includes various characteristic portions, for example, the nose, the eyes, the mouth, and the forehead. Based on these characteristic portions contained in the image data, it is possible to precisely determine the age and gender of the user by using face recognition. Existing solutions for face recognition for example are offered by Google (Google face recognition kit). Alternatively or additionally, the age and gender of the user may be obtained via user input.

Based on the determined age and gender, a value can be selected from a database that corresponds to the population average pupil distance of a person with this age and gender. For this purpose, a real-time calculation can be performed in the background based on existing data sets, or a selection can be made from a table with a pre-assigned pupil distance and age and gender. The population average value for pupil distance may be given as a metric measure of length, e.g., millimeter.

Face recognition is further performed in order to determine the virtual pupil distance in pixels within the image data. For this purpose, several points may be defined at specific positions on the user's face image, for example 68 key points which are mapped to the face of the user. Out of these, a subset of key points may be elected which represent the eyes of the user. For example, six key points may represent each eye. The position of the key points may be used to determine the location of the pupils to determine the distance to each other. In particular, the Euclidean distance may be determined in pixels.

The focal length of a camera is the distance between the lens and the optical sensor when a subject is in focus, usually stated in millimeters. For webcams, the focal length is often known in millimeters but may easily be transformed in pixels, preferably in pixels according to the pixel size of the respective electronic display screen.

The focal length of the camera in pixels is queried on the user's end, which may be the frontend, via the firmware and/or the available hardware information. The information may be provided to the backend server. It may be provided that the focal length of the camera is transformed from a different unit measurement system into pixels.

The fact that both, the focal length of the camera and the virtual pupil distance, are measured in pixels does not affect the precision of the calculation, since this unit is shortened in the calculation formula below. All measurements in pixels are defined with respect to the user's frontend device, which may be a personal computer or a smart device including a camera.

The similar-triangles-calculation is based on a rule of three that relates a triangle between the lens of the camera and the optical sensor of the camera to a triangle between the lens of the camera and the pupils of the user. The following equation may be used: current face-to-camera distance of the user = population average value for pupil distance * focal length in pixels / virtual pupil distance in pixels. Alternatively, or additionally, other common triangle calculations can be used.

The measuring unit pixel may be related to the properties of the electronic display screen of the frontend device. Alternatively or additionally, the virtual pupil distance is calculated with respect to the image data captured by the camera irrespective of how (e.g. how large, which zoom level, resolution or the like) the image is shown on the electronic display screen. Image processing, in particular the determination of the virtual pupil distance in pixels may therefore be performed independent from the frontend device. In other words: The image data captured by the camera may be the only basis for determining the virtual pupil distance.

It may be necessary to convert the focal length of the camera from another measuring unit, such as millimeters, to pixels. The current face-to-camera distance resulting from the similar-triangles-calculation is, if the image data is a life stream of the user, the face-to-camera distance in real-time. A possible latency of the communication link is neglected at this point.

According to a second aspect of the present invention, a computer-implemented method for face-to-camera distance measurement may be provided. The method may be performed on a frontend device, such as a smart device or a personal computer. The method may comprise obtaining, using a camera, image data of a user's face. The method may comprise transmitting the image data to a backend-server, wherein face recognition may be performed. The face recognition may comprise estimating an age and a gender of the user and/or obtaining the age and gender of the user via user input and selecting a population average value for pupil distance that matches to the age and gender of the user. Face recognition may further comprise determining a virtual pupil distance in pixels within the image data. The method may comprise obtaining the camera's focal length in pixels and sending it to the backend-server. The method may comprise receiving a current face-to-camera distance of the user from the backend-server, wherein the backend-server may be configured to perform a similar-triangles-calculation, preferably based on the following equation: current face-to-camera distance of the user = population average value for pupil distance * focal length in pixels / virtual pupil distance in pixels.

The frontend device may be any type of suitable device with which a user may interact in order to perform human-machine interaction. Examples for frontend devices are a personal computer, a smart device, in particular a portable smart device, preferably a smartphone. Further, it is preferred that the frontend device comprises an electronic display screen and a camera. The electronic display screen may in particular be a touchscreen serving as an interface for user input. The camera may be an integrated or separated camera, as described with respect to the first aspect of the present invention.

Everything said with regard to the first aspect of the present invention, also applies to the second aspect of the present invention and vice versa.

The method according to the first and/or second aspect of the present invention may further comprise receiving or obtaining a size of an electronic display screen at which the camera is spatially arranged. The size may be received or obtained via user input and/or may be determined automatically based on a resolution of the electronic display screen and based on a pixel density of the electronic display screen and/or may be determined through an application that scans the user's hardware. Further, the method may comprise receiving or obtaining user input including an indication of the position of the camera relative to the electronic display screen. Further, the method may comprise determining, preferably using the theorem of Pythagoras, a current face-to-screen distance being an approximated distance between the user's face and a center of the electronic display screen, based on the current face-to-camera distance, the indication of the position of the camera and the size of the electronic display screen.

Receiving a size of an electronic display screen may be performed by a backend-server.

Obtaining a size of an electronic display screen may be performed by a frontend device. The size may either be determined via user input and/or may be determined automatically based on a resolution of the electronic display screen and based on a pixel density of the electronic display screen and/or by an application which scans the user's hardware. In the case of size determination via user input, the user may simply input the width and height or the screen diagonal and screen format. In the case of automatic size determination through the resolution and the pixel density of the electronic display screen and/or an application which scans the user's hardware, the said values may be obtained from a firmware and/or hardware information of the frontend device.

Many operating systems inherently preserve the resolution, the pixel density and the physical size of a respective electronic display screen. Thus, it is particularly beneficial and convenient to use this information for determining the size of the electronic display screen. For this purpose, a simple multiplication of the resolution and the pixel density may be performed.

The resolution of a display screen is the number of distinct pixels in each dimension that can be displayed. It is usually quoted as width x height, with the unit "pixels". For example, a resolution of 1024 x 768 means the width is 1024 pixels and the height is 768 pixels.

The pixel density of a display screen is regularly specified in the unit "pixels per inch" (ppi) and/or "pixels per centimeter" (ppcm or pixels/cm). For example, the pixel density of computer monitors, television displays or image digitizing device such as a cameras or image scanners, is regularly given in ppi. Horizontal and vertical pixel density are usually the same, as most devices have square pixels. Other than the resolution, the pixel density describes the amount of detail on a physical surface or device, wherein the resolution describes the amount of pixel information regardless of its scale.

Alternatively or additionally, it is possible to use an application on the frontend device which scans the user's hardware, returning the size of the diagonal of the electronic display screen. This value is normally stored by the operating system and is available only locally, and not in browsers. For that reason, the user runs an application on his frontend device. This application may then transmit the size of the diagonal of the electronic display screen back to a main application which may be a browser application. Optionally, the application may, after scanning the user's hardware, open a session, preferably a user-unique session, for performing the test(s). By obtaining the diagonal size and the resolution, the height and width of the electronic display screen can be calculated using the Pythagorean theorem. These values can also be precalculated and stored in a database.

To increase the robustness against errors, a user input can be used additionally. For example, the user can measure the width and height of the electronic display screen and enter it in a suitable unit of measurement, such as cm. If the resolution and/or the pixel density are not available, only a user input can also be used.

The camera of a frontend device is in general spatially arranged at the electronic display screen of said frontend device. For example, a personal computer may have an integrated or separately connected webcam placed in the middle of the upper edge of the screen. A smartphone may have an integrated camera in one corner of the screen, e.g. embedded in a so-called punch hole.

Usually, the plane surface of the camera and the screen are approximately the same, such that the face-to-camera distance and the face-to-screen distance are approximately the same. For the purpose of high precision human-machine interaction it may however be beneficial to rely on the face-to-screen distance being the distance between the user's face and a center of the electronic display screen. For this purpose, the size of the display screen and the information with respect to the position of the camera may be used to transform the face-to-camera distance to the face-to-screen distance. For this purpose, the indication of the position of the camera and the size of the electronic display screen are used to build a virtual orthogonal triangle, wherein the edges of the triangle are the camera, the center of the electronic display screen and the user's face. Based on said virtual triangle, simple triangle calculation, such as the theorem of Pythagoras, is suitable for the desired transformation from the face-to-camera distance to the face-to-screen distance.

It may be provided that the face-to-camera distance and/or the face-to-screen distance is continuously determined using the image data, the image data being a continuous video stream.

The method may further comprise determining whether the current face-to-camera distance and/or the current face-to-screen distance of the user is within a predefined tolerance range around a predetermined first target distance; and if the current face-to-camera distance and/or the current face-to-screen distance is outside the predefined tolerance range around the predetermined first target distance, instructing the user, through a display unit, to adjust his position accordingly, and if the current face-to-camera distance and/or the current face-to-screen distance is outside the predefined tolerance range around the predetermined first target distance, instructing the user, through the display unit, to maintain his position. Further, performing a first human-machine-interaction may be provided.

Further, it may be provided repeating, based on a predetermined second and third target distance, the steps of determining whether the current face-to-camera distance and/or the current face-to-screen distance of the user is within a predefined tolerance range, and the step of instructing the user, and the step of performing a human-machine-interaction, wherein preferably the second distance is larger than the first distance and/or the third distance is larger than the second distance.

Further, it may be provided that the first target distance is approximately 40 cm and/or the second target distance is approximately 100 cm and/or the third target distance is approximately 300 cm.

The predefined tolerance range may be 5 cm, preferably 3 cm, preferably 1 cm. It may be provided that the predefined tolerance range for the first target distance is smaller than the predefined tolerance range for the second target distance. Alternatively or additionally, it may be provided that the predefined tolerance range of the second target distance is smaller than the predefined tolerance range of the third target distance.

Alternatively, the predefined tolerance range(s) may be in a percentage range of 5 % to 10 %, for example 10 %, preferably 8 %, preferably 5%.

It may be provided visual and/or acoustic and/or haptic user guidance. A visual user guidance may for example be performed using the electronic display screen of the frontend device which may show the user an indication of whether he must move forward or backward in order to be in the predefined tolerance range regarding the respective target distance. This may be implemented through green and red indication colors on the user interface of the frontend device. For example, flashing may be provided, which is in a specific color and at a specific frequency to guide the user. An acoustic user guidance may be performed through sounds which are emitted using a speaker of the frontend device indicating the user whether he must move forward or backward in order to be in the predefined tolerance range regarding the respective target distance. For example, beeping may be provided, which is in a specific frequency and repetition rate to guide the user. A haptic user guidance may be performed through a vibration unit of the frontend device indicating, through different haptic feedback, whether the user must move forward or backward in order to be in the predefined tolerance range regarding the respective target distance. For example, vibrating may be provided, which is in a specific amplitude and repetition rate to guide the user.

According to a third aspect of the present invention, a computer-implemented method of performing a human-machine-interaction, preferably a telemedical test, preferably a telemedical ophthalmological test, is provided, wherein a method according to the first and/or second aspect of the present invention is used.

An example for a human-machine-interaction may be a computer game that requires players to be within a certain distance from the electronic display screen in order toto enhance the game experience or create a fair playing condition for all players. A further example may be a telemedical test, in particular a telemedical ophthalmological test for providing easy and accessible tests without the need to see a doctor.

For many applications of human-machine-interaction, in particular in telemedical tests, there may be a requirement that content displayed on the screen is displayed at a certain size, regardless of the size of the screen. This can be ensured by determining the screen size as described above and thus scaling the content to the correct size. Thus, the letters for a visual acuity test may for example appear in a desired size, regardless of the screen size.

Everything said with respect to the first and second aspect of the present invention, also applies to the third aspect of the present invention and vice versa.

The method according to the third aspect of the present invention may comprise at least one of the following ophthalmological tests, wherein for each of the tests a respective test-pattern may be displayed on an electronic display screen of a smart device or a personal computer, and wherein for each of the tests a respective user input may be received and computed:
- a color blindness test, using a smart device having a camera and an electronic display screen, preferably a smartphone, wherein the smart device is configured to communicate with a backend-server;
- a contrast sensitivity test, using a smart device having a camera and an electronic display screen, preferably a smartphone, wherein the smart device is configured to communicate with a backend-server;
- an Amsler grid test, using a smart device having a camera and an electronic display screen, preferably a smartphone, wherein the smart device is configured to communicate with a backend-server;
- a cover-uncover strabismus test, using a smart device having a camera and an electronic display screen, preferably a smartphone, wherein the smart device is configured to communicate with a backend-server;
- a visual acuity test, using a smart device, preferably a smartphone, and a personal computer comprising a camera, wherein the smart device and the personal computer are configured to communicate with a backend-server.

Exemplary workflows of the tests are explained in detail in the figure description.

According to a fourth aspect of the present invention, a computer-implemented method of performing a human-machine-interaction, preferably a visual acuity test, is provided. The method may be performed on a backend-server. The method may comprise establishing a connection between the backend-server and a personal computer having an electronic display screen and a camera, preferably via a WebSocket connection, and starting a test session. The method may comprise providing a machine-readable code, preferably a QR-code on the electronic display screen of the personal computer. The method may comprise receiving, from a smart device, the machine-readable code and assigning the smart device to the same session as the personal computer based on the code, wherein a connection between the backend-server and the smart device is established, preferably via WebSocket connection. The method may comprise guiding the user to a desired face-to-camera or face-to-screen distance through the method according to the first and/or second aspect of the present invention. The method may comprise providing a test-pattern on the electronic display screen of the personal computer. The method may comprise receiving user input via the smart device. The method may comprise determining the visual acuity of the user's eyes.

Alternatively or additionally to WebSockets, Microservices may be used. Further, the person skilled in the art is aware of other protocols for which are suitable to provide the respective connections, in particular between the frontend device(s) and the backend-server.

According to a fifth aspect of the present invention, a backend-server configured to provide telemedical tests according to the third and/or fourth aspect of the present invention, is provided.

According to a sixth aspect of the present invention, a smart device having a camera and an electronic display screen, preferably a smartphone, wherein the smart device is configured to communicate with a backend-server, preferably according to the fifth aspect of the present invention, for performing telemedical tests according to the third and/or fourth aspect of the present invention, is provided.

According to a seventh aspect of the present invention, a system comprising a backend-server, a personal computer comprising a camera and/or a smart device, preferably a smartphone, wherein the system is configured to perform a telemedical test according to the third and/or fourth aspect of the present invention, is provided.

It may be provided that the personal computer and/or the smart device is/are connected to the backend-server via a WebSocket connection.

According to an eighth aspect of the present invention, a computer program product comprising instructions which, when the program is executed by a computer, cause the computer to carry out the method of the first and/or second and/or third and/or fourth aspect of the present invention, is provided.

All technical implementation details and advantages described with respect to one of the different aspects of the present invention are self-evidently mutatis mutandis applicable for the other aspects of the present invention.

### BRIEF DESCRIPTION OF THE DRAWINGS

The disclosure may be better understood by reference to the following drawings:
- Fig. 1:: A block diagram illustrating a possible hardware and communication setup for performing a visual acuity test according to embodiments of the present invention.
- Fig. 2:: An exemplary start screen of a frontend device being a smart device for ophthalmological tests according to embodiments of the present invention.
- Fig. 3a:: An exemplary first screen of a frontend device being a smart device for a color blindness test according to embodiments of the present invention.
- Fig. 3b:: An exemplary second screen of a frontend device being a smart device for a color blindness test according to embodiments of the present invention.
- Fig. 3c:: An exemplary third screen of a frontend device being a smart device for a color blindness test according to embodiments of the present invention.
- Fig. 3d:: An exemplary fourth screen of a frontend device being a smart device for a color blindness test according to embodiments of the present invention.
- Fig. 4a:: An exemplary first screen of a frontend device being a smart device for a contrast sensitivity test according to embodiments of the present invention.
- Fig. 4b:: An exemplary second screen of a frontend device being a smart device for a contrast sensitivity test according to embodiments of the present invention.
- Fig. 4c:: An exemplary third screen of a frontend device being a smart device for a contrast sensitivity test according to embodiments of the present invention.
- Fig. 4d:: An exemplary fourth screen of a frontend device being a smart device for a contrast sensitivity test according to embodiments of the present invention.
- Fig. 5a:: An exemplary first screen of a frontend device being a smart device for a amsler test according to embodiments of the present invention.
- Fig. 5b:: An exemplary second screen of a frontend device being a smart device for an Amsler grid test according to embodiments of the present invention.
- Fig. 5c:: An exemplary third screen of a frontend device being a smart device for an Amsler grid test according to embodiments of the present invention.
- Fig. 5d:: An exemplary fourth screen of a frontend device being a smart device for an Amsler grid test according to embodiments of the present invention.
- Fig. 6a:: An exemplary first screen of a frontend device being a smart device for a first visual acuity test according to embodiments of the present invention.
- Fig. 6b:: An exemplary second screen of a frontend device being a smart device for a first visual acuity test according to embodiments of the present invention.
- Fig. 6c:: An exemplary third screen of a frontend device being a smart device for a first visual acuity test according to embodiments of the present invention.
- Fig. 6d:: An exemplary fourth screen of a frontend device being a smart device for a first visual acuity test according to embodiments of the present invention.
- Fig. 6e:: An exemplary fifth screen of a frontend device being a smart device for a first visual acuity test according to embodiments of the present invention.
- Fig. 6f:: An exemplary sixth screen of a frontend device being a smart device for a first visual acuity test according to embodiments of the present invention.
- Fig. 6g:: An exemplary seventh screen of a frontend device being a smart device for a first visual acuity test according to embodiments of the present invention.
- Fig. 6h:: An exemplary eighth screen of a frontend device being a smart device for a first visual acuity test according to embodiments of the present invention.
- Fig. 7a:: An exemplary first screen of a frontend device being a smart device for a second visual acuity test which may be part of a first visual acuity test according to embodiments of the present invention.
- Fig. 7b:: An exemplary second screen of a frontend device being a smart device for a second visual acuity test which may be part of a first visual acuity test according to embodiments of the present invention.
- Fig. 7c:: An exemplary third screen of a frontend device being a smart device for a second visual acuity test which may be part of a first visual acuity test according to embodiments of the present invention.
- Fig. 8:: A flowchart diagram illustrating an exemplary workflow of a strabismus test, in particular a cover-uncover-test according to embodiments of the present invention.
- Fig. 9:: A first flowchart diagram illustrating at least partially the face recognition step and the face-to-screen distance determination according to embodiments of the present invention.
- Fig. 10:: A second flowchart diagram illustrating at least partially the face recognition step and the face-to-screen distance determination according to embodiments of the present invention.
- Fig. 11:: An illustration of key points used for face recognition according to embodiments of the present invention.
- Fig. 12:: A flowchart diagram illustrating a possible test routine according to embodiments of the present invention.
- Fig. 13a:: A first illustration of a web-application on a frontend device according to embodiments of the present invention.
- Fig. 13b:: A second illustration of a web-application on a frontend device according to embodiments of the present invention.
- Fig. 13c:: A third illustration of a web-application on a frontend device according to embodiments of the present invention.
- Fig. 13d:: A fourth illustration of a web-application on a frontend device according to embodiments of the present invention.
- Fig. 14a:: A first illustration of a screen of a personal computer and a corresponding screen of a smart device which is used as an input device according to embodiments of the present invention.
- Fig. 14b:: A second illustration of a screen of a personal computer and a corresponding screen of a smart device which is used as an input device according to embodiments of the present invention.
- Fig. 14c:: A third illustration of a screen of a personal computer and a corresponding screen of a smart device which is used as an input device according to embodiments of the present invention.
- Fig. 14d:: A fourth illustration of a screen of a personal computer and a corresponding screen of a smart device which is used as an input device according to embodiments of the present invention.
- Fig. 15:: A first activity chart illustrating a test routine for an ophthalmological test according to embodiments of the present invention.
- Fig. 16:: A second activity chart illustrating a test routine for an ophthalmological test according to embodiments of the present invention.
- Fig. 17:: A third activity chart illustrating a test routine for an ophthalmological test according to embodiments of the present invention.
- Fig. 18:: A fourth activity chart illustrating a test routine for an ophthalmological test according to embodiments of the present invention.
- Fig. 19:: A fifth activity chart illustrating a test routine for an ophthalmological test according to embodiments of the present invention.
- Fig. 20:: A sixth activity chart illustrating a test routine for an ophthalmological test according to embodiments of the present invention.
- Fig. 21:: A seventh activity chart illustrating a test routine for an ophthalmological test according to embodiments of the present invention.
- Fig. 22:: An eighth activity chart illustrating a test routine for an ophthalmological test according to embodiments of the present invention.

### DESCRIPTION OF PREFERRED EMBODIMENTS

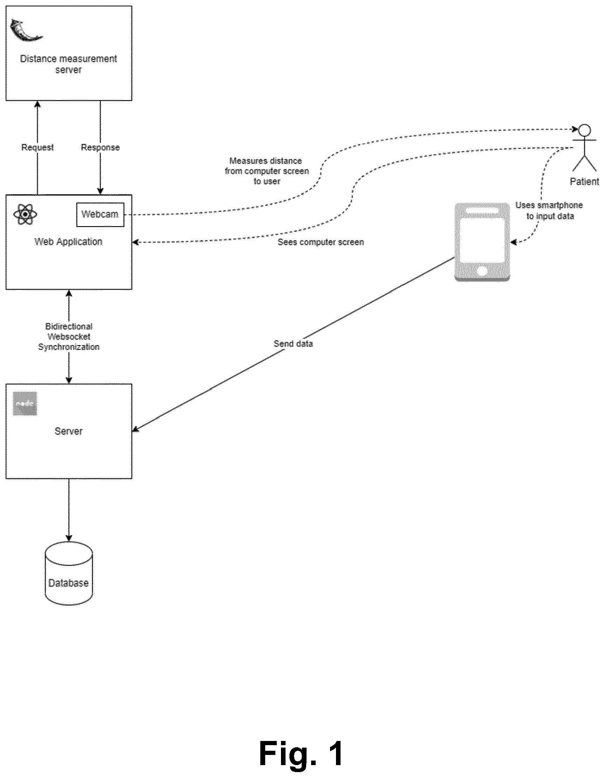

Referring to figure 1, one exemplary embodiment of a hardware setup and communication setup during an ophthalmological test, for example a visual acuity test, is illustrated. As can be seen from the illustration, at the backend side, a server, in particular backend-server, is provided including a database. Further, at the backend side, a distance measurement server is provided. The server and the distance measurement server may be separate or the same.

At the frontend, the user, in particular the patient, runs a personal computer including a webcam which runs a web application. The personal computer comprises an electronic display screen which is capable to display content to the user. The webcam is capable of recording image data of the user's face. The personal computer is connected to the server via a WebSocket connection which is a bidirectional connection. Further, the personal computer is able to communicate with the distance measurement server. The user, in particular the patient, further runs a smartphone. The smartphone is used as an input device and is configured to provide the user input to the server. For this purpose, the smartphone may also be connected to the server through a WebSocket connection.

By using, on the frontend side, a personal computer as well as a smartphone, it is possible to provide ophthalmological tests in various distances from the electronic display screen of the personal computer, without any restrictions with respect to the ability of the user to input data. For example, the user may be required to look at content on the electronic display screen in a distance of 40 cm, 1 m and 3m. At higher distances, the user cannot input data into the personal computer due to the limitations of his arm length. Therefore, the smartphone may be used for providing input.

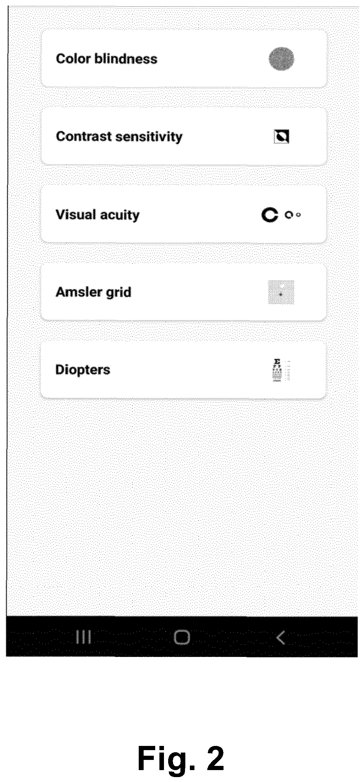

Figures 2, 3a-3d, 4a-4d, 5a-5d, 6a-6h, 7a-7c and 8 provide an insight into a possible full-scale test sequence comprising various sub-tests.

As illustrated in figure 2, which may be a start screen of a mobile application on a smartphone, it is possible for the user to perform a color blindness test, a contrast sensitivity test, a first visual acuity test, an Amsler grid test and a second visual acuity test. The user may select the test he wants to do and/or do more than one of the tests. Further to this, it may be provided that the user can select a strabismus test including a cover-uncover test.

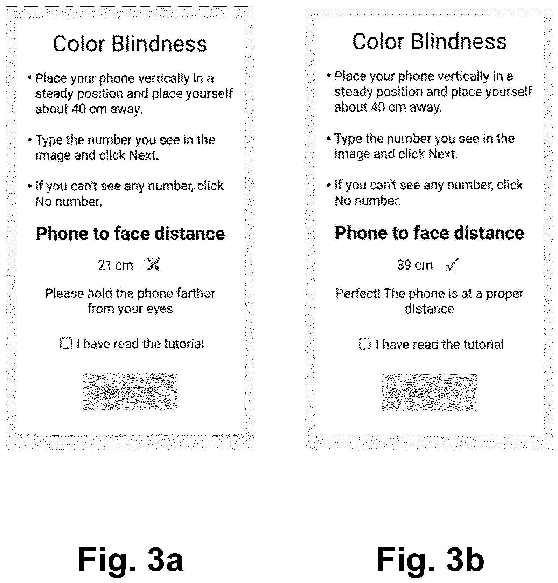

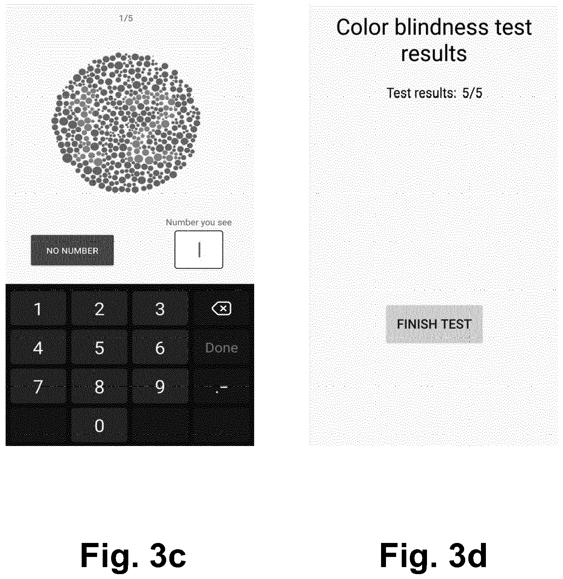

Figures 3a-3d illustrate the color blindness test: This test may be based on the classic Ishihara test for color blindness and check different for different conditions such as Red-green deficiency, Protanopia/Protanomaly, Deuteranopia/Deuteranomaly. The user receives instructions on how to perform the test and the distance between the screen and the face of the user. If the distance is not in the required range or the user has not confirmed reading the instructions, the test cannot begin. This prevents wrong interpretations of the results. After the conditions are met, the test can begin. The test is based on the digitalization of the original Ishihara test for color blindness, but continuously monitoring the distance between the user and the screen, allowing for remote screenings. At the end, results are displayed based on the number of correct answers in relation with the total number of answers.

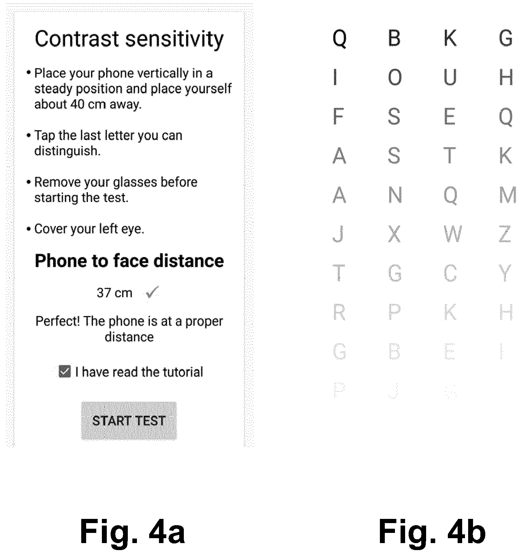

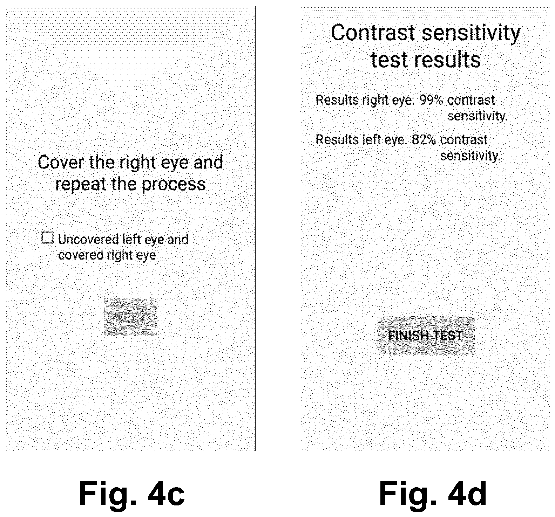

Figures 4a-4d illustrate the contrast sensitivity test: This test checks the user's contrast sensitivity for each eye separately. A series of letters is shown in a decreasing contrast order, starting from black (100%) and ending with white (0%). The user must select the last letter in the series which he can see. First, the user must place himself at a distance between 35 and 45 cm to the screen and read the instructions. After the test begins, the user must click on the last letter he can see. The same process is repeated for the other eye. The results are displayed based on which letter the user has selected. For example, if the result is 82% for one eye, the user could detect an 82% contrast reduction from the color black, which has a "full" contrast.

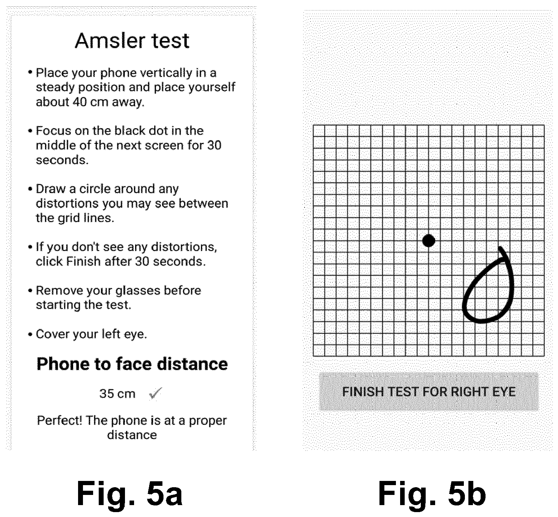

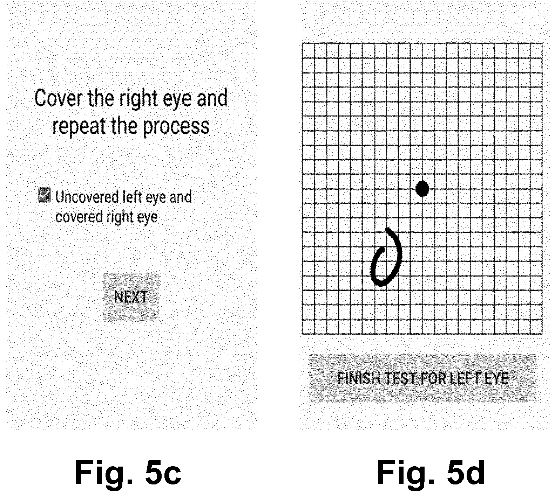

Figures 5a-5d illustrate the Amsler grid test: This test detects symptoms of Age-Related Macular Degeneration. After being in the right distance range, the user must focus on the black dot and mark the area on the screen where he sees distortions in the grid, if he sees such distortions. The user must then repeat the process for the other eye.

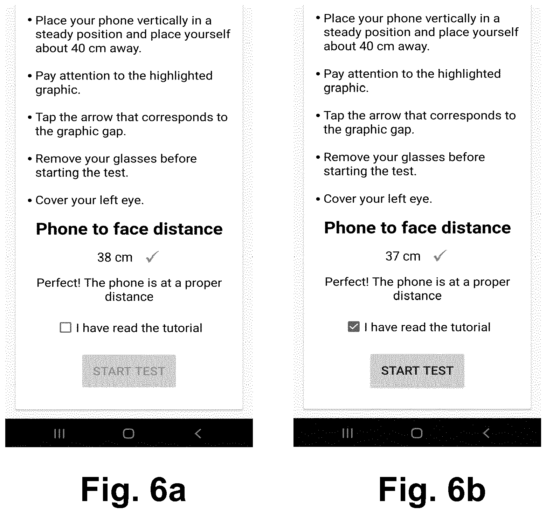

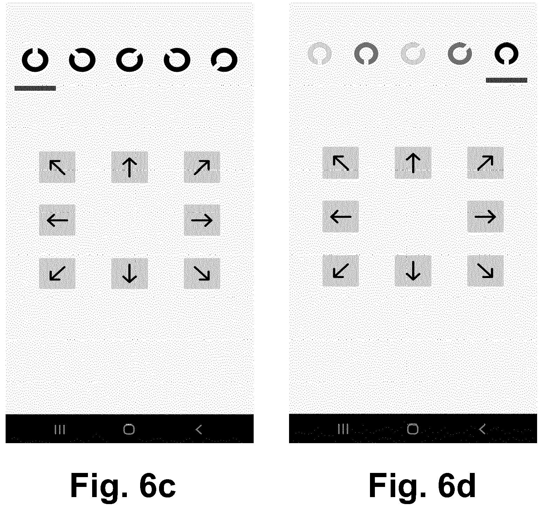

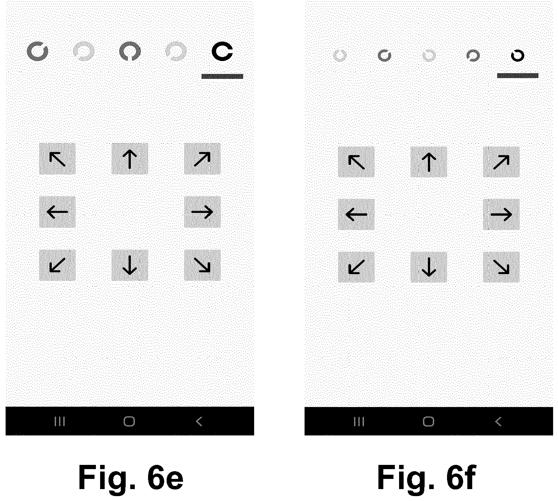

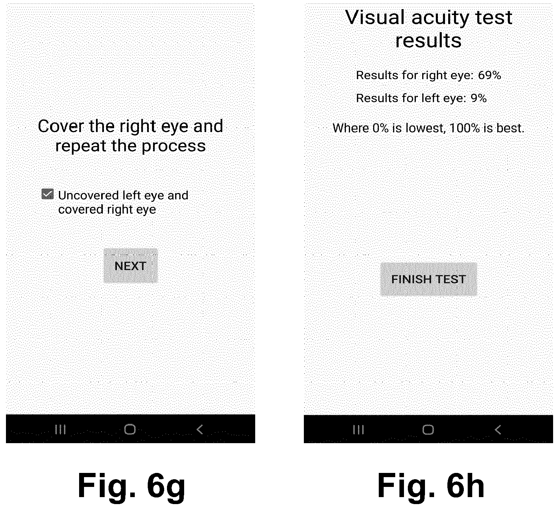

Figures 6a-6h illustrate the first visual acuity test: After the user is in the right distance range and has confirmed that he has read the tutorial, the test can be started. The Landolt eye test is used to check whether the eye can see sufficiently sharply. It was developed in the 1870s by Swiss ophthalmologist Edmund Landolt. Based on the Snellen eye test, Landolt developed an optotype (eye mark) that does not show letters, but a ring shape that is open on one side. With the help of this eye test it was possible and still is possible to diagnose defective vision even in children and illiterate people. Today, the Landolt ring is the standard eye mark for eye tests, which is prescribed in the European standard EN ISO 8596 (as well as in the previously valid DIN standard DIN 58220) for measuring visual acuity.

The task for the user is to identify on which side the opening of the rings is located. The rings become smaller and smaller. Arrows pointing in different directions are displayed below the rings. The user chooses the arrow that, in his opinion, matches the opening of the respective ring. This test may be performed for each eye separately. Further, this test may be repeated in different distances from the screen, e.g. 40 cm, 1 m, 3 m. For this purpose, at the frontend, two devices may be used, wherein one device is in the right distance showing the respective content, and the other device is used as an input device as describes above with respect to figure 1.

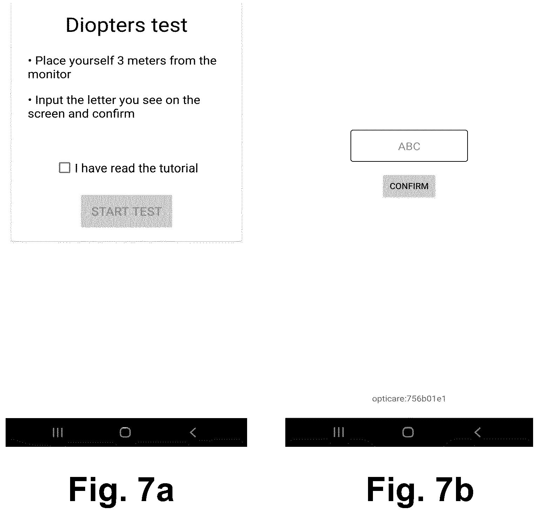

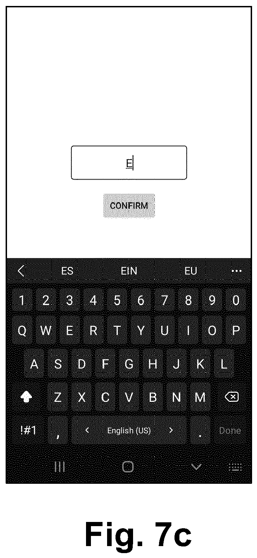

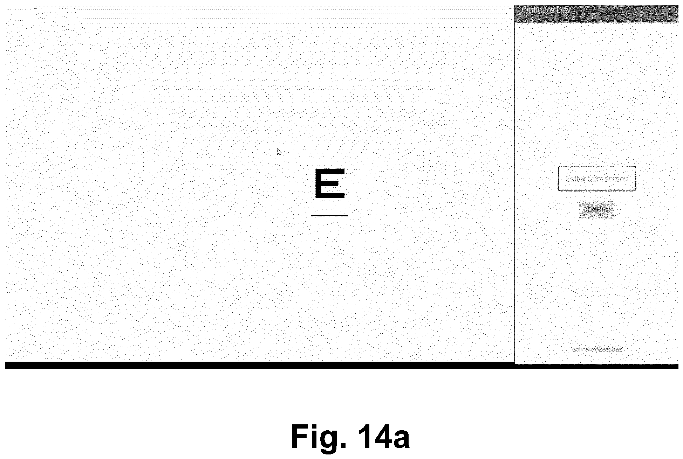

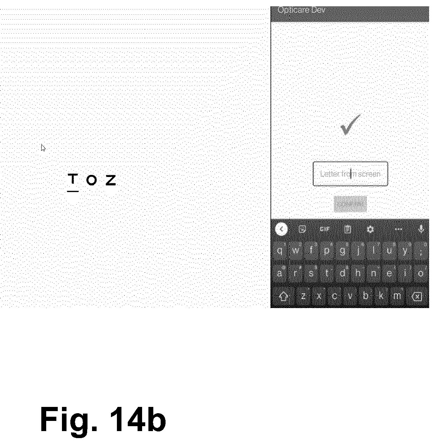

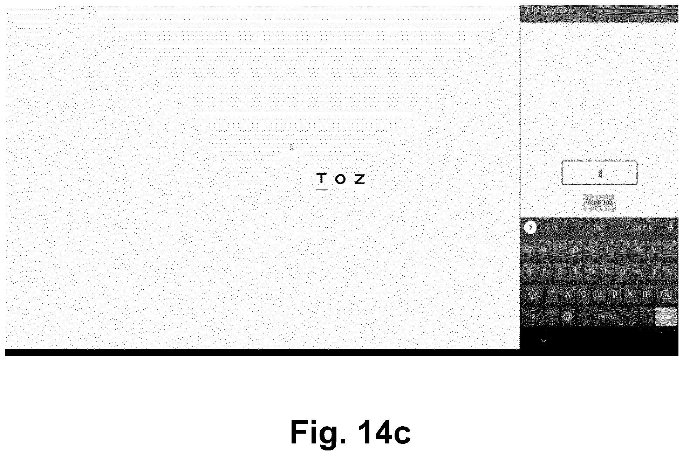

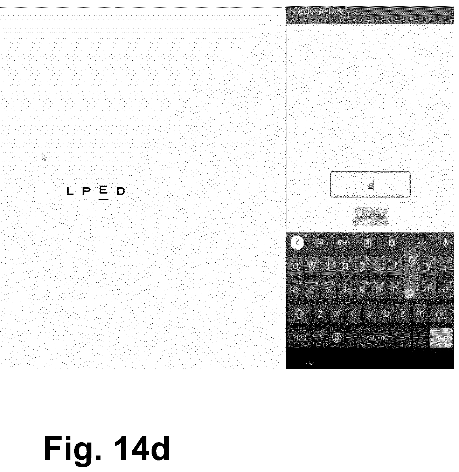

Figures 7a-7c illustrate the second visual acuity test, which may be part of the first visual acuity test. The test may be based on the Snellen chart, on the LogMAR chart or on the ETDRS chart. Apart from that, the same approach is followed as for the test of figures 6a-6h, but the user has to input the concrete letters. Illustrations of the corresponding software, in particular a personal computer application and a corresponding smart device application can be seen in figures 14a-14d.

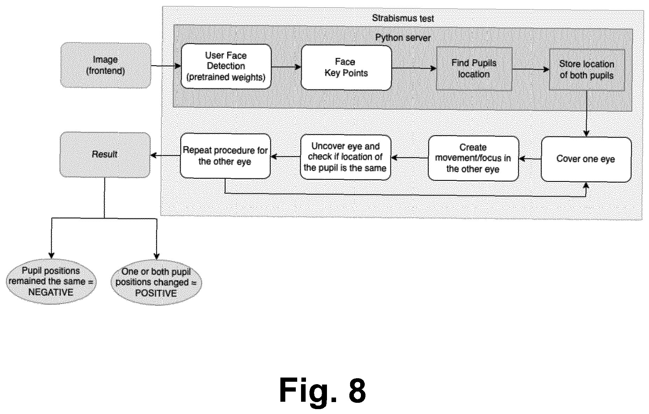

Figure 8 illustrates the strabismus test based on the cover-uncover test: The application can be divided into 2 main components: frontend (Ul) and the face detection server (Python). In order to test for strabismus for a user of the software, the application needs one input: a recorded video (or a sequence of images) obtained from the webcam of a PC/Laptop/Smartphone/Tablet of the user, sent from the frontend. The test should use the video as a whole for the analysis, and analyze it image by image. The frontend sends an image to the Python server, which will detect a face and return a set of key points as landmarks on the face. Using these key points, we detect the pupils' location in the eyes and store these as coordinates for each image sent from the frontend. We then move on to the cover-uncover test. Once the first eye is covered, we store the pupil's coordinates for this eye from the last image before the covering process has been done, in order to use it later. We will compare these coordinates with the ones we obtain from the first image processed after the eye is uncovered. If these coordinates are the same (or similar with some small error margin), we can then affirm that the test has been passed for this eye and the result will be negative (no strabismus detected). We then repeat the same procedure for the other eye, covering it and storing the last known pupil's coordinates for the covered eye and comparing it with the new pupil coordinates obtained once the eye is uncovered. If the coordinates are the same (or similar with some small error margin), we can then affirm that the test has been passed for this eye and the result will be negative (no strabismus detected). If the test has been passed for both eyes, we can affirm that the result of the whole test is negative (no strabismus detected). If one of the tests (or both) fails, the result of the whole test will be positive (strabismus detected).

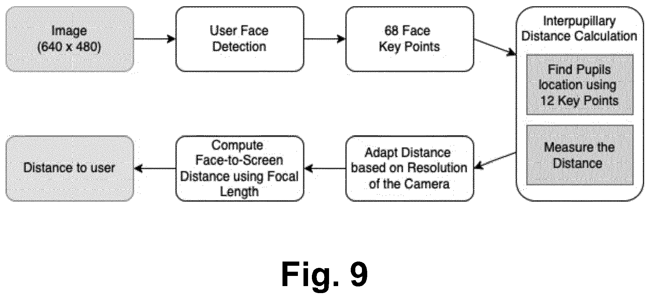

Figures 9 shows a flowchart diagram illustrating at least partially the face recognition step and the face-to-screen distance determination according to embodiments of the present invention. At first, image data of the user's face is captured by a camera and provided to a server. The image data is processed, wherein 68 key points are defined. 12 of the 68 key points are related to the location of the user's eyes. In other words: each eye of the user is outlined with 6 key points. The respective pupil of one eye of the user is estimated for example by calculating the geometric center of the respective 6 key points. Alternatively or additionally, in order to refine the location of the pupil, it is possible to take into account that to color of the pupil is darker than the rest of the eye. The pupil distance is measured in the image data and is adapted to the distance based on the resolution of the camera, as described previously, such that the pupil distance in pixels is obtained. The face-to-camera and/or face-to-screen distance may be then determined as described above.

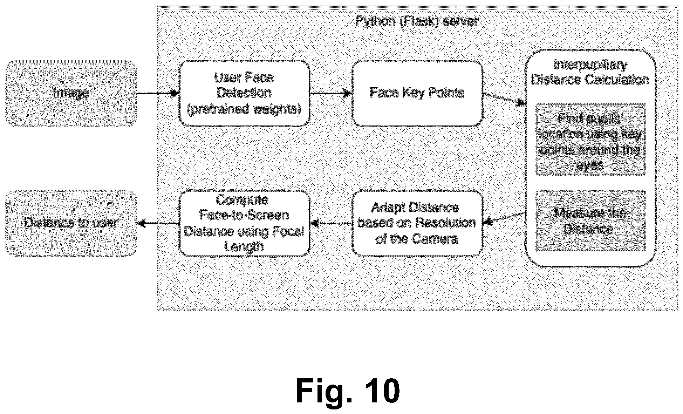

As illustrated in figure 10, face recognition may be performed using a Python (Flask) server. Further, for the face recognition, a machine-learning model including pre-trained weights of specific portions of the face may be used to define the position of the key points.

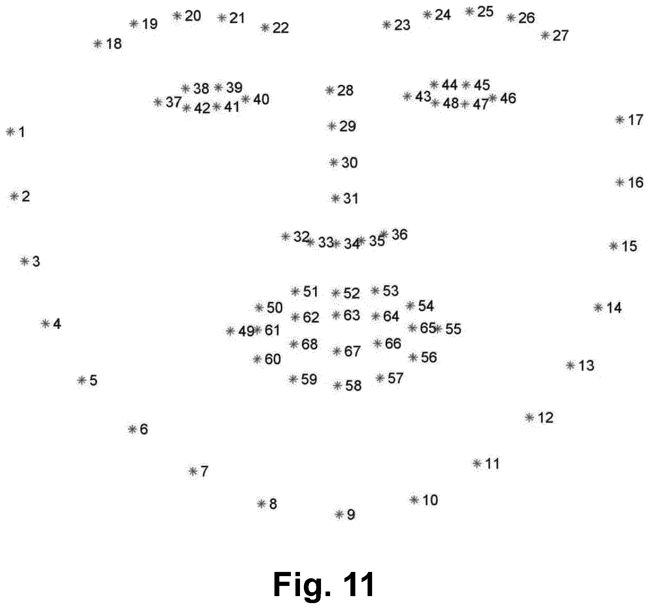

Said key points are illustrated in figure 11. The key points with the numbers 37 to 48 are the ones which outline the eyes of the user.

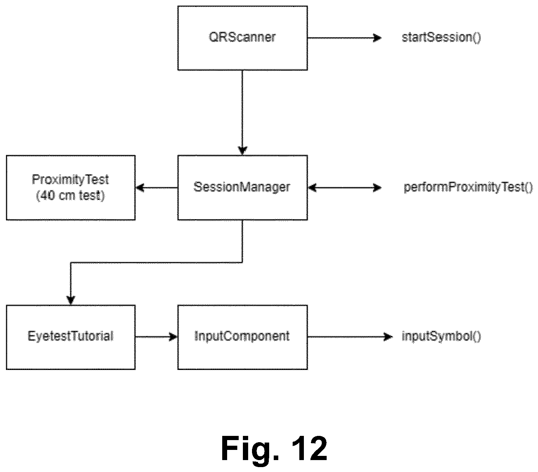

Figure 12 is a flowchart illustrating how a test session is started. It may be provided that, if two frontend devices are used for a test, as described above, a QR-Code is displayed on the electronic display screen of the personal computer. The smart device may then scan the QR-Code in order to also connect to the backend-sever. The connections of the personal computer with the backend-server and of the smart device with the backend-server may be managed by a session manager.

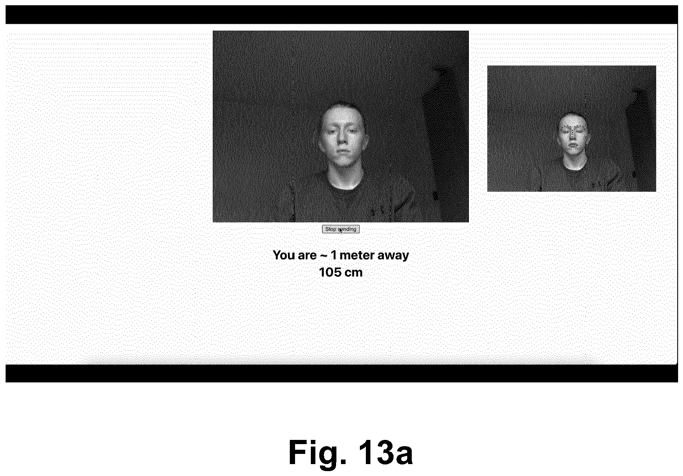

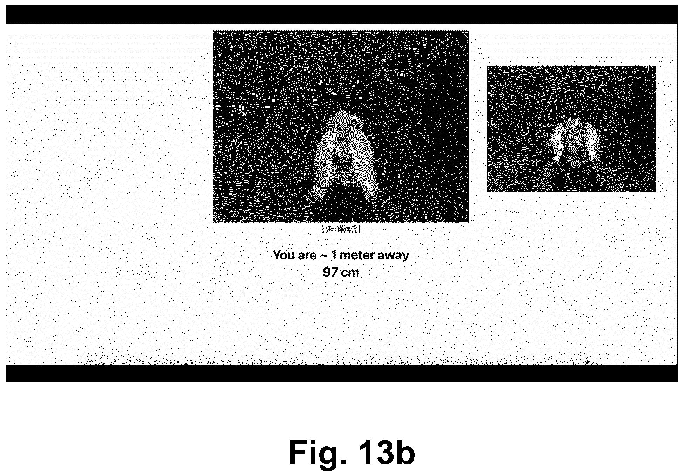

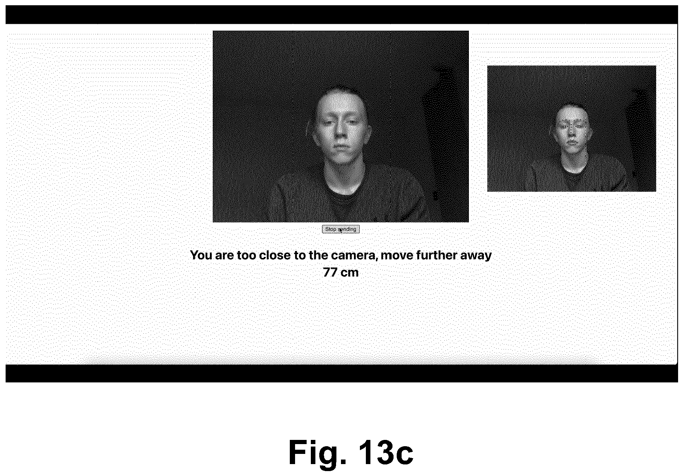

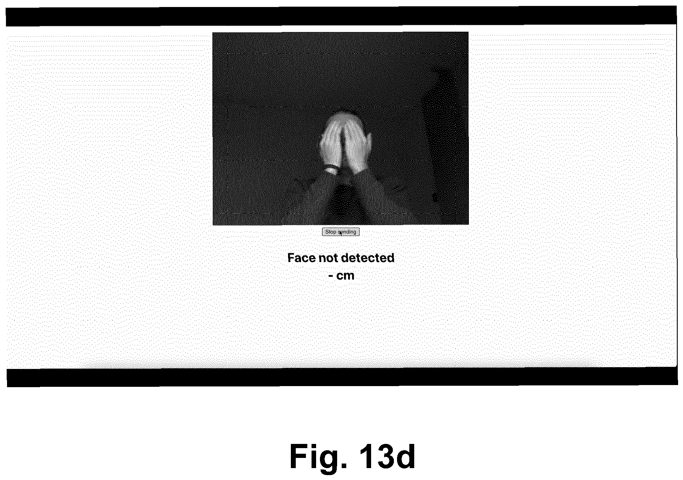

Figures 13a to 13d illustrate a web-application on a frontend device having a camera, in particular a personal computer. In figure 13a and 13b, the face-to-screen distance is displayed to the user. Th figure 13c, the frontend device informs the user that the distance is too small, and the user has to move away. In figure 13d, no face was recognized due to the fact that the user covers his face with his hands. In this case, a corresponding information is displayed to the user.

Figures 14a to 14d illustrate on the left-hand side the screen of a personal computer and on the right-hand side the screen of a smart device which is used as an input device. For ophthalmological tests performed with a personal computer and a smart device, it may be provided that the input is made through the smart device (right-hand side) and the test content is displayed on the personal computer (left-hand side). However, the input made through a smart device may be displayed on the personal computer such that the user directly sees his input values.

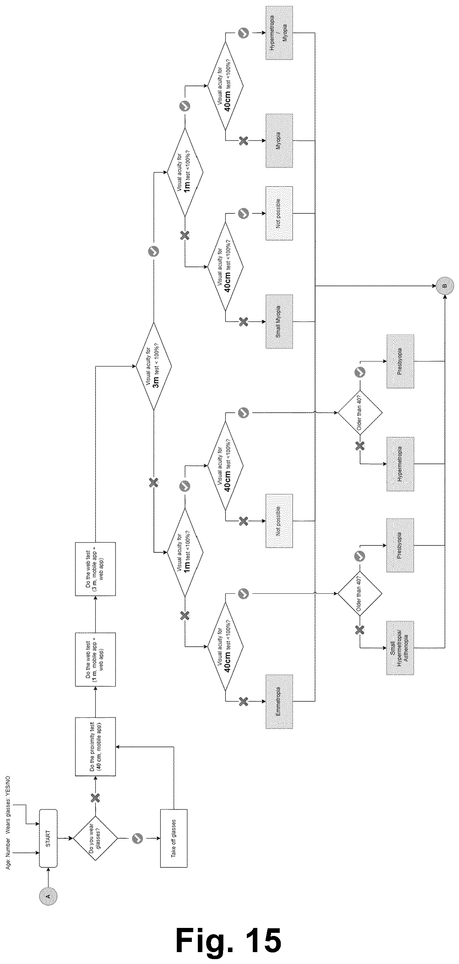

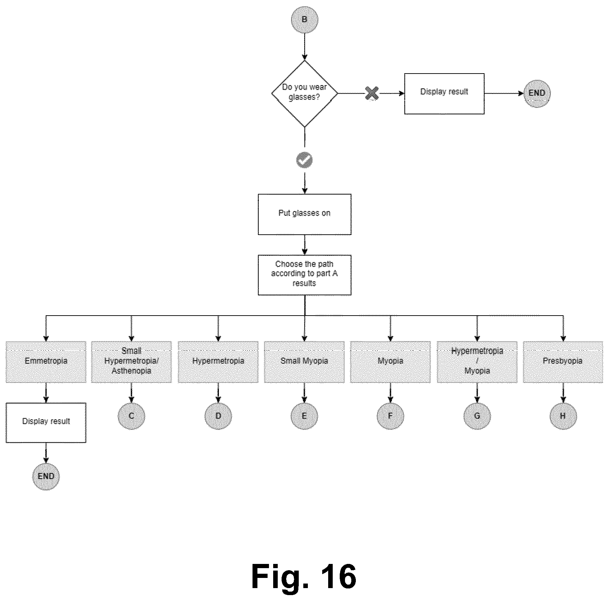

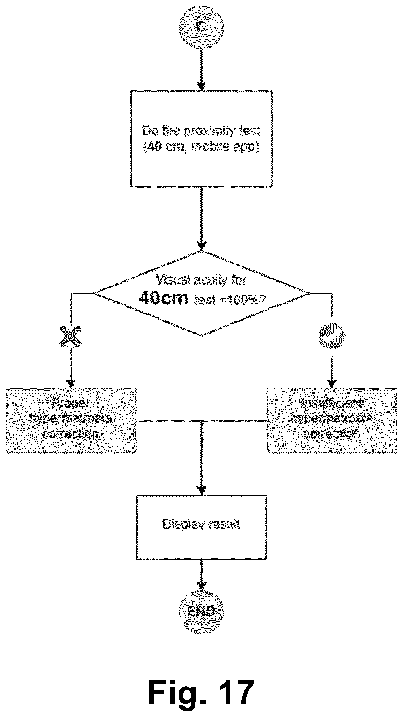

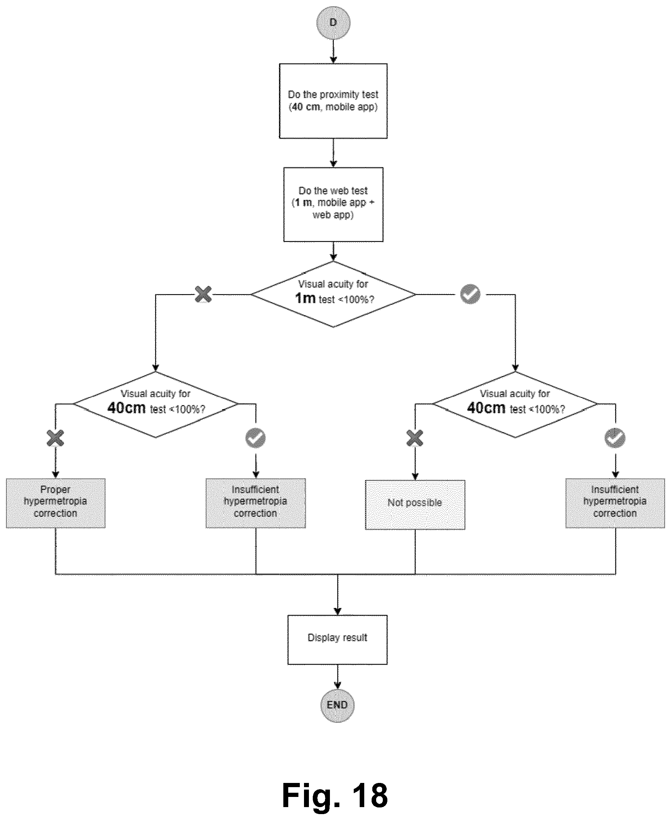

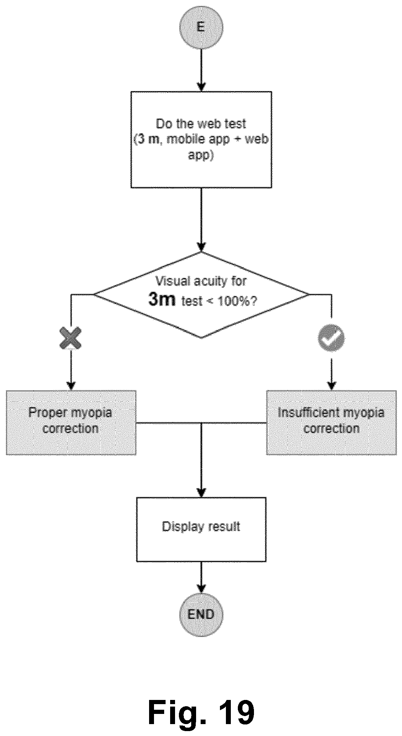

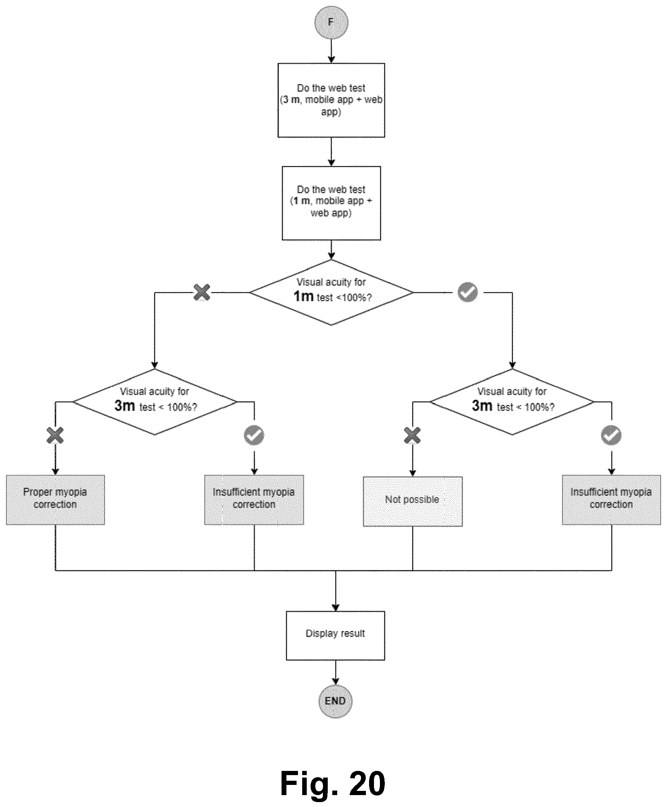

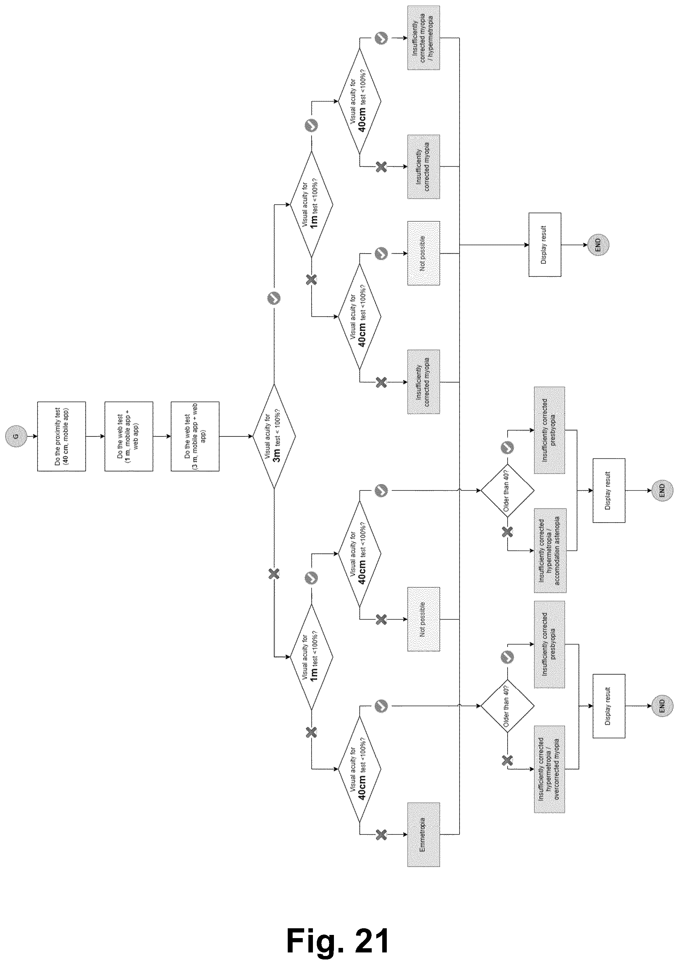

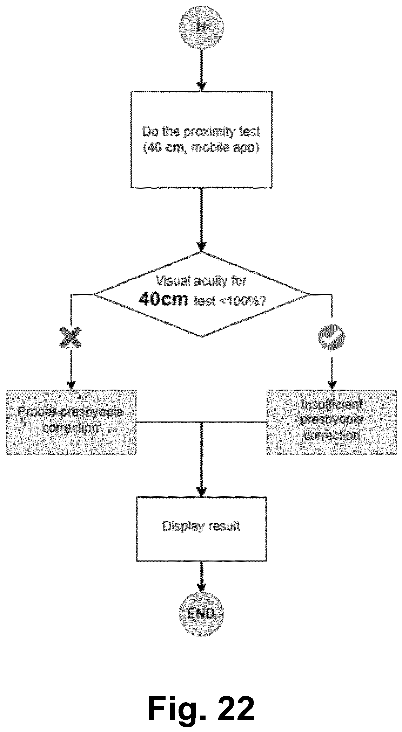

Figures 15 to 22 are activity charts of various test routines.

In the following, another blueprint of at least a part of the present invention is described in different words:
The application can be divided into four big components: frontend (Ul), backend (server), mobile application and the distance measuring server.

For the frontend one can use React together with open-source libraries from its ecosystem. For the form responsible for collecting information from the user we used Formik. One of the core concepts used in the implementation of the visual acuity test is the Session. Every time a test is initiated on the frontend, a Session with a unique session ID is created on the server. Each message exchanged between the components contains the session ID. The frontend displays a QR code which encodes the session ID. The mobile application contains a QR code scanner which decodes the image containing the QR code from the Ul and sends the session ID to the server, thus initiating the connection. The Ul is always in sync with the server by using a bidirectional connection called WebSocket. In this way, the role of the frontend is reduced to displaying data incoming from the server. A WebSocket connection is also used between the mobile application and the server such that the server can send data to the mobile app while also receiving it. The frontend is also responsible for capturing images and sending them to the distance measurement server by issuing requests and displaying the incoming responses.

The backend can be built using NodeJS, a common technology for writing server-side software. The communication layer can be implemented using GraphQL for async messaging and WebSockets or separate libraries for each (Express for the REST API and an open source library for WebSockets). The backend also contains the business logic, which in our case is the rules of the visual acuity ophthalmological test. The session ID along with the session state is stored in a database for a limited amount of time calculated from the time of creation such that the server can be deployed to a cloud provider without the fear that session data can be lost when the provider restarts the server/starts new instances of the server. The backend can be implemented in any technology which supports WebSocket connections. The used database can either be SQL or NoSQL.

The mobile application can be built in any technology which can access the technical parameters of the front camera (the algorithm which measures the distance from the patient to the phone requires the focal length of the camera). The distance from the phone to the face of the patient is measured directly on the phone, without the need of an external system using Google's face recognition kit which is bundled with the application. When the application is used to scan the QR code from the frontend, a WebSocket connection is initiated between the phone and the server.

The distance measurement server is written in Python and uses Flask to expose an API. It accepts an image encoded as a base 64 string, processes it using image processing and ML techniques after which it returns the distance from the webcam to the patient or an error if no user was detected in the picture. In order to compute the distance from the camera (or screen) to the user, the application needs three inputs: the focal length of the camera and the interpupillary distance, measured both in pixels (on the screen) and in centimeters (in real-life). The focal length has been pre calibrated for the application, using offline experiments and precise eye-to-eye measurements. After the face detection is done, there will be 68 key points mapped to the face of the user. Out of these 68, there will be 6 points representing each eye (12 in total) which will be used to determine the location of the pupils, for which we will compute the Euclidean distance (in pixels). Then, using the average interpupillary distance for a human (depends on the age group/sex), we calculate the distance from the face to the screen of the user, based on the triangle similarity.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Machine Learning

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### Computer implementation

Embodiments of the invention may be implemented on a computer system. The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented method for face-to-camera distance measurement, the method being performed on a backend-server, comprising:
receiving image data of a user's face, the image data being recorded by a camera;
performing face recognition comprising
estimating an age and a gender of the user and/or obtaining the age and gender of the user via user input, and selecting a population average value for pupil distance that matches to the age and gender of the user, and
determining a virtual pupil distance in pixels within the image data;
receiving the camera's focal length in pixels;
performing a similar-triangles-calculation for determining a current face-to-camera distance of the user, based on the following equation: current face-to-camera distance of the user = population average value for pupil distance * focal length in pixels / virtual pupil distance in pixels.

2. A computer-implemented method for face-to-camera distance measurement, the method being performed on a frontend device, in particular on a smart device or a personal computer, comprising:
obtaining, using a camera, image data of a user's face;
transmitting the image data to a backend-server, wherein face recognition is performed, comprising
estimating an age and a gender of the user and/or obtaining the age and gender of the user via user input, and selecting a population average value for pupil distance that matches to the age and gender of the user, and
determining a virtual pupil distance in pixels within the image data;
obtaining the camera's focal length in pixels and sending it to the backend-server;
receiving a current face-to-camera distance of the user from the backend-server, wherein the backend-server is configured to perform a similar-triangles-calculation based on the following equation: current face-to-camera distance of the user = population average value for pupil distance * focal length in pixels / virtual pupil distance in pixels.

3. The computer-implemented method of one of the preceding claims, further comprising:
receiving or obtaining a size of an electronic display screen at which the camera is spatially arranged, wherein the size is received or obtained via user input and/or is determined automatically based on a resolution of the electronic display screen and based on a pixel density of the electronic display and/or from an application which scans the user's hardware
receiving or obtaining user input including an indication of the position of the camera relative to the electronic display screen;
determining, preferably using the theorem of Pythagoras, a current face-to-screen distance being an approximated distance between the user's face and a center of the electronic display screen, based on the current face-to-camera distance, the indication of the position of the camera and the size of the electronic display screen.

4. The computer-implemented method of one of the preceding claims, wherein the face-to-camera distance and/or the face-to-screen distance is continuously determined using the image data, the image data being a continuous video stream.

5. The computer-implemented method of one of the preceding claims, further comprising:
determining whether the current face-to-camera distance and/or the current face-to-screen distance of the user is within a predefined tolerance range around a predetermined first target distance;
if the current face-to-camera distance and/or the current face-to-screen distance is outside the predefined tolerance range around the predetermined first target distance, instructing the user, through a display unit, to adjust his position accordingly, and if the current face-to-camera distance and/or the current face-to-screen distance is outside the predefined tolerance range around the predetermined first target distance, instructing the user, through the display unit, to maintain his position;
performing a first human-machine-interaction.

6. The computer-implemented method of claim 5, comprising:
repeating, based on a predetermined second and third target distance, the steps of determining whether the current face-to-camera distance and/or the current face-to-screen distance of the user is within a predefined tolerance range, and the step of instructing the user, and the step of performing a human-machine-interaction,
wherein preferably the second distance is larger than the first distance and/or the third distance is larger than the second distance.

7. The computer-implemented method of claim 5 or 6, wherein the first target distance is approximately 40 cm and/or the second target distance is approximately 100 cm and/or the third target distance is approximately 300 cm.

8. A computer-implemented method of performing a human-machine-interaction, preferably a telemedical test, preferably a telemedical ophthalmological test, wherein a method according to one of claims 1 to 7 is used.

9. The computer-implemented method of claim 8, comprising at least one of the following ophthalmological tests, wherein for each of the tests a respective test-pattern is displayed on an electronic display screen of a smart device or a personal computer, and wherein for each of the tests a respective user input is received and computed:
- a color blindness test, using a smart device having a camera and an electronic display screen, preferably a smartphone, wherein the smart device is configured to communicate with a backend-server;
- a contrast sensitivity test, using a smart device having a camera and an electronic display screen, preferably a smartphone, wherein the smart device is configured to communicate with a backend-server;
- an Amsler grid test, using a smart device having a camera and an electronic display screen, preferably a smartphone, wherein the smart device is configured to communicate with a backend-server;
- a cover-uncover strabismus test, using a smart device having a camera and an electronic display screen, preferably a smartphone, wherein the smart device is configured to communicate with a backend-server;
- a visual acuity test, using a smart device, preferably a smartphone, and a personal computer comprising a camera, wherein the smart device and the personal computer are configured to communicate with a backend-server.

10. A computer-implemented method of performing a human-machine-interaction, preferably a visual acuity test, the method being performed on a backend-server, comprising:
establishing a connection between the backend-server and a personal computer having an electronic display screen and a camera, preferably via a WebSocket connection, and starting a test session;
providing a machine-readable code, preferably a QR-code on the electronic display screen of the personal computer;
receiving, from a smart device, the machine-readable code and assigning the smart device to the same session as the personal computer based on the code, wherein a connection between the backend-server and the smart device is established, preferably via WebSocket connection;
guiding the user to a desired face-to-camera or face-to-screen distance through the method according to one of claims 1 to 7;
providing a test-pattern on the electronic display screen of the personal computer;
receiving user input via the smart device;
determining the visual acuity, preferably including the diopter of the user's eyes.

11. A backend-server configured to provide telemedical tests according to one of claims 8 to 10.

12. A smart device having a camera and an electronic display screen, preferably a smartphone, wherein the smart device is configured to communicate with a backend-server, preferably according to claim 11, for performing telemedical tests according to one of claims 8 to 10.

13. A system comprising a backend-server, a personal computer comprising a camera and/or a smart device, preferably a smartphone, wherein the system is configured to perform a telemedical test according to one of claims 8 to 10.

14. A system according to claim 13, wherein the personal computer and/or the smart device is/are connected to the backend-server via a WebSocket connection.

15. A computer program product comprising instructions which, when the program is executed by a computer, cause the computer to carry out the method of any one of claims 1 to 10.
